Europäisches Patentamt

**European Patent Office**

**Office européen des brevets**

(19)

(11) Veröffentlichungsnummer: **0 003 011**
**B1**

(12)
# EUROPÄISCHE PATENTSCHRIFT

(45) Veröffentlichungstag der Patentschrift:
**08.04.81**

(21) Anmeldenummer: **79100002.9**

(22) Anmeldetag: **02.01.79**

(51) Int. Cl.³: **C 09 K 17/00,** C 04 B 9/16,
E 21 F 17/00

(54) **Herstellungsverfahren für eine Injektionsdispersion.**

(30) Priorität: **02.01.78 DE 2800068**

(43) Veröffentlichungstag der Anmeldung:
**11.07.79 Patentblatt 79/14**

(45) Bekanntmachung des Hinweises auf die Patenterteilung:
**08.04.81 Patentblatt 81/14**

(84) Benannte Vertragsstaaten:
**BE FR GB SE**

(56) Entgegenhaltungen:
**CH-A-325 018**
**DE-A-2 216 289**
**FR-A-1 028 572**
**FR-A-1 052 411**
**FR-A-2 259 974**

(73) Patentinhaber: **Saarbergwerke Aktiengesellschaft,**
**Postfach 1030, Trierer Strasse 1 D-6600 Saarbrücken (DE)**

(72) Erfinder: **Klinkner, Hans-Guido, Dr. Dipl.-Ing.,**
**Grubenweg 20, D-6670 St. Ingbert (DE)**
Erfinder: **Culmann, Günter, Im Kuhfeld 1,**
**D-6680 Neunkirchen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

BUNDESDRUCKEREI BERLIN

## Herstellungsverfahren für eine Injektionsdispersion

Die Erfindung bezieht sich auf ein Herstellungsverfahren für eine Injektionsdispersion aus konzentrierter Magnesiumchloridlösung, gebranntem Magnesit, Zusatzmitteln und einem Anteil Kunststoff zum Verfestigen von Kohle und/oder gebrächem Nebengestein.

Derartige Injektionsdispersionen werden im Bergbau dort angewandt, wo infolge tektonischer Störungen Ausböschungen des Kohlenstoßes und Hangendausbrüche auftreten, die den mechanischen Abbau im Streb behindern und somit den Abbaufortschritt beeinträchtigen.

Bekannt ist das Injizieren einer Dispersion aus Magnesiumchloridlösung, gebranntem Magnesit und Bentonitmehl (DE-C-2 204 281). Nachteilig ist die relativ lange Abbindezeit.

Es wurden auch bereits schäumende und nichtschäumende Kunststoffe ohne Beimischungen in Bohrlöchern injiziert. Nachteilig ist die Brennbarkeit und mangelnde Eigenfestigkeit von Kunststoffen.

Bekannt ist auch der Zusatz von Carboxymethylzellulose zu Magnesiabinder, um die Klebewirkung der Injektionsdispersion zu verbessern. Carboxymethylzellulose entwickelt jedoch geringe Klebekraft als Zusatz zu Magnesiabinder.

Aus der DE-A-2 216 289 ist es bekannt, bei der Herstellung einer Injektionsdispersion aus Magnesiumchloridlösung, gebranntem Magnesit und Bentonitmehl zur Erhöhung der Viskosität teilverseiftes Polyvinylacetat beizumischen, damit die in der Injektionsdispersion verteilten feinen Gasbläschen in der Schwebe gehalten werden. Ferner wird auch durch Fällung, gewonnenes reaktionsfähigeres Magnesiumoxid zugesetzt.

Nachteilig ist, daß die Injektionsdispersion geringe Festigkeitswerte aufweist und sich durch den Zusatz des teilverseiften Polyvinylacetats die Abbindezit verlängert.

Aufgabe der vorliegenden Erfindung ist es, eine Injektionsdispersion der eingangs genannten Art herzustellen, die eine bessere Klebefähigkeit und eine geringe Abbindezeit aufweist.

Erfindungsgemäß wird dies dadurch erreicht, daß der Kunststoffanteil in Form einer Dispersion aus unverseiftem Vinylpolymer zugemischt wird, und Zusatzmittel in Form von Bentonitmehl und/oder in Form von hochaktivem gefälltem Magnesiumoxid zugesetzt werden.

Als Vinylpolymere sind u. a. folgende Polymere und/oder Copolymere geeignet: Polyvinylpropionat, Copolymerisate des Vinylacetats bzw. Vinylpropionats mit Äthylen, Vinylchlorid, Vinylbenzol, Acrylsäureestern und Maleinsäuredibutylester.

Als Zusatzmittel sind Bentonitmehl und/oder gefälltes hochaktives Magnesiumoxid vorgesehen. Schon der Zusatz eines Anteils von beispielsweise 4 Gew.-% gefälltem hochaktivem Magnesiumoxid bewirkt eine starke Beschleunigung des Abbindeverlaufs und eine deutliche Verbesserung der Klebkraft.

Besonders vorteilhaft an der Erfindung ist die erhöhte Verleimungsfestigkeit der ausgehärteten Injektionsdispersion, die kurze Abbindezeit und die erhöhte Klebefähigkeit, die überraschenderweise durch den Zusatz einer Dispersion von unverseiftem Vinylpolymer, insbesondere in Verbindung mit einem Zusatz von gefälltem hochaktivem Magnesiumoxid, bewirkt wird.

Die im folgenden angegebenen Versuche sollen die Erfindung weiter erläutern.

### Versuchsreihe 1

Nach Einrühren verschiedener Mengen von Bentonitmehl in Magnesiabinder, d. h. einer Mischung aus konzentrierter Magnesiumchloridlösung und gebranntem Magnesit, wurden Verleimungsfestigkeit und Abbindzeit der Injektionsdispersion gemessen. Die Magnesiumchloridlösung hatte ein spez. Gewicht von 1,334 kg/l (konzentrierte Lösung). Der technisch gebrannte Magnesit hatte einen Magnesiumoxidgehalt von 86,4 Gew.-%.

Die Mischungsverhältnisse der Ansätze und die Ergebnisse sind in der nachstehenden Tabelle 1 wiedergegeben. Ansatz 1 enthält keine Kunstharzdispersion und dient als Vergleich für Ansatz 2 und 3 mit Kunstharzdispersion. Es zeigt sich, daß bei einem Zusatz von 2,5 Gew.-% Kunstharzdispersion die Werte für die Verleimungsfestigkeit zu einem Maximum ansteigen und sich die Abbindezeit verringert. Bei einem Zusatz von 5 Gew.-% Kunstharzdispersion verringert sich die Verleimungsfestigkeit etwas, während die Abbindezeit ein Minimum erreicht.

### Versuchsreihe 2

Die Mischungsverhältnisse der Ansätze und die Ergebnisse sind in der nachstehenden Tabelle 2 wiedergegeben. Der Injektionsdispersion wird anstelle von Bentonitmehl, gefälltes hochaktives Magnesiumoxid zugesetzt. Es zeigt sich zum einen, daß die Meßwerte für die Verleimungsfestigkeit steigen und bei einer Zugabe von 5 Gew.-% Kunstharzdispersion ein Maximum erreichen. Die Abbindezeit verringert sich stetig bei einer Zugabe von 10 Gew.-% Kunstharzdispersion oder darüber.

Die Versuche in beiden Versuchsreihen wurden mit handelsüblicher Polyvinylpropionatdispersion durchgeführt, die einen Feststoffgehalt von 40 – 60 Gew.-% aufweist.

Es ist auch möglich, der Injektionsdispersion beliebig zusammengesetzte Mischungen aus Bentonitmehl und gefälltem hochaktivem Magnesiumoxid als Zusatzmittel zuzusetzen, um vorgebbare Abbindezeiten und Verleimungsfestigkeiten zu erreichen und um Kosten zu sparen.

Ein weiterer Vorteil der Erfindung besteht darin, die flüssigen Bestandteile wie Magnesiumchloridlösung und Vinylpolymerdispersion einerseits und die festen Bestandteile, nämlich gebrannten Magnesit und die Zusatzmittel andererseits, übertage mischen zu können. Dadurch entfällt ein getrennter Transport aller Dispersionsbestandteile an den Verwendungsort. Vor Ort werden die vermischten festen Bestandteile der aus Magnesiumchloridlösung und Vinylpolymerdispersion bestehenden Flüssigkeit zugesetzt, und die fertige Injektionsdispersion ihrer Verwendung zugeführt.

Eine weitere vorteilhafte Handhabung besteht darin, bereits übertage eine Trübe aus konzentrierter Magnesiumchloridlösung, Vinylpolymerdispersion und Bentonitmehl herzustellen und dieser Trübe den gebrannten Magnesit erst kurz vor der Anwendung untertage hinzuzufügen.

Anstelle von Vinylpropionat können auch Kunstharzdispersionen auf der Basis sonstiger Vinylpolymere angewendet werden, wobei Polymere und/oder Copolymere des Vinylacetats und/oder Vinylpropionats mit Äthylen, Vinylchlorid, Vinylbenzol sowie mit Acrylsäureestern und Maleinsäureestern mit naturgemäß unterschiedlichen Wirkungen eingesetzt werden können.

Besonders geeignet ist auch ein Copolymerisat von Vinylacetat mit Acrylsäureester, das gegenüber Polyvinylpropionat eine deutlich höhere Haftfähigkeit aufweist.

Tabelle 1

| Ansatz Nr. | Zusammensetzung des Binders (Gew.-%) | | | | Verleimungs-Festigkeit da N/cm² | Abbindezeit- im Dewargefäß (min) | Verbesserung der Klebkraft, gegenüber Ansatz 1 (%) | Verkürzung der Abbindezeit gegenüber Ansatz 1 (%) |
|---|---|---|---|---|---|---|---|---|
| | a) konz. MgCl₂-Lösung von spez. Gewicht 1330 kg/m³ | b) gebrannter Magnesit | c) Bentonit | d) Kunstharz-dispersion auf Polyvinyl-propionat-Basis | | | | |
| 1 | 52,8 | 31,5 | 15,7 | 0 | 25,4 | 404 | 0 | 0 |
| 2 | 50,3 | 31,5 | 15,7 | 2,5 | <u>34,1</u> | 390 | <u>34,3</u> | 3,5 |
| 3 | 47,8 | 31,5 | 15,7 | 5,0 | 27,9 | 374 | 9,8 | <u>7,4</u> |

Tabelle 2

| Ansatz Nr. | Zusammensetzung des Binders (Gew.-%) | | | | Verleimungs-Festigkeit da N/cm² | Abbindezeit im Dewargefäß (min) | Verbesserung der Klebkraft gegenüber Beispiel 1 (%) | Verkürzung der Abbindezeit gegenüber Beispiel 1 (%) |
|---|---|---|---|---|---|---|---|---|
| | a) konz. MgCl₂-Lösung von spez. Gewicht 1330 kg/m³ | b) gebrannter Magnesit | c) gefälltes hochaktives MgO | d) Kunstharz-dispersion auf Polyvinyl-propionat Basis | | | | |
| 4 | 55,0 | 32,7 | 12,3 | 0 | 39,6 | 152 | 55,9 | 62,4 |
| 5 | 52,5 | 32,7 | 12,3 | 2,5 | 43,4 | 144 | 70,9 | 64,4 |
| 6 | 50,0 | 32,7 | 12,3 | 5,0 | <u>44,4</u> | 128 | <u>74,8</u> | 68,3 |
| 7 | 45,0 | 32,7 | 12,3 | 10,0 | 41,4 | 88 | 63,0 | <u>78,2</u> |

## Patentansprüche

1. Herstellungsverfahren für eine Injektionsdispersion aus konzentrierter Magnesiumchloridlösung, gebranntem Magnesit, Zusatzmitteln und einem Anteil Kunststoff zum Verfestigen von Kohle und/oder gebrächem Nebengestein, dadurch gekennzeichnet, daß der Kunststoffanteil in Form einer Dispersion aus unverseiftem Vinylpolymer zugemischt wird und Zusatzmittel in Form von Bentonitmehl und/oder in Form von hochaktivem gefälltem Magnesiumoxid zugesetzt werden.

2. Herstellungsverfahren nach Anspruch 1, dadurch gekennzeichnet, daß es sich bei dem Vinylpolymer um ein Polyvinylpropionat handelt.

3. Herstellungsverfahren nach Anspruch 1 oder 2, dadurch gekennzeichnet, daß es sich bei dem Vinylpolymer um ein Copolymerisat von Vinylchlorid und/oder Vinylbenzol und/oder Acrylsäureester und/oder Maleinsäureester handelt.

4. Herstellungsverfahren nach Anspruch 3, dadurch gekennzeichnet, daß es sich bei dem Copolymerisat um ein solches von Vinylacetat mit Acrylsäureester handelt.

5. Herstellungsverfahren, nach einem der Ansprüche 1 bis 4, dadurch gekennzeichnet, daß die Injektionsdispersion bis zu 20 Gew.-% Vinylpolymerdispersion, vorzugsweise 2,5 bis 10 Gew.-% (bezogen auf die gesamte Injektionsdispersion) mit einem Feststoffgehalt von 40 bis 60 Gew.-% enthält.

6. Herstellungsverfahren nach einem der Ansprüche 1 bis 5, dadurch gekennzeichnet, daß als Zusatzmittel bis zu 25 Gew.-% Bentonitmehl zugesetzt wird.

7. Herstellungsverfahren nach einem der Ansprüche 1 bis 6, dadurch gekennzeichnet, daß als Zusatzmittel bis zu 20 Gew.-% hochaktives gefälltes Magnesiumoxid zugesetzt wird.

8. Herstellungsverfahren nach einem der Ansprüche 1 bis 7, dadurch gekennzeichnet, daß die Vinylpolymerdispersion der Magnesiumchloridlösung zugesetzt wird und der Flüssigkeit, unmittelbar vor der Anwendung, gebrannter Magnesit sowie hochaktives Magnesiumoxid und/oder Bentonitmehl zugegeben wird.

9. Herstellungsverfahren nach einem der Ansprüche 1 bis 8, dadurch gekennzeichnet, daß die Vinylpolymerdispersion der Magnesiumchloridlösung zugesetzt wird, dann unter Rühren Bentonitmehl zugemischt wird und dieser transportfähigen Mischung der gebrannte Magnesit und/oder das gefällte hochaktive Magnesiumchlorid unmittelbar vor der Anwendung unter Rühren zugeführt wird.

## claims

1. Process for the production of an injection dispersion consisting of concentrated magnesium chloride solution, calcined magnesite, additives and a synthetic resin component, for the consolidation of coal and/or crushed gangue, characterised in that the synthetic resin component is added in the form of a dispersion of unsaponified vinyl polymer and that additives are added in the form of bentonite powder and/or of highly active precipitated magnesium oxide.

2. Production process as claimed in Claim 1, characterised in that the vinyl polymer is a polyvinyl propionate.

3. Production process as claimed in Claim 1 or 2, characterised in that the vinyl polymer is a copolymer of vinyl chloride and/or vinyl benzene and/or acrylic acid ester and/or maleic acid ester.

4. Production process as claimed in Claim 3, characterised in that the copolymer is a copolymer of vinyl acetate and acrylic acid ester.

5. Production process as claimed in one of Claims 1 to 4, characterised in that the injection dispersion contains up to 20% by weight of vinyl polymer dispersion, preferably 2.5 to 10% by weight (with respect to the total injection dispersion) with a solids content of 40 to 60% by weight.

6. Production process as claimed in one of Claims 1 to 5, characterised in that up to 25% by weight of bentonite powder is added as additive.

7. Production process as claimed in one of Claims 1 to 6, characterised in that up to 20% by weight of highly active precipitated magnesium oxide is added as additive.

8. Production process as claimed in one of Claims 1 to 7, characterised in that the vinyl polymer dispersion is added to the magnesium chloride solution and immediately prior to use, calcined magnesite, as well as highly active magnesium oxide and/or bentonite powder, are added to the liquid.

9. Production process as claimed in one of Claims 1 to 8, characterised in that the vinyl polymer dispersion is added to the magnesium chloride solution, bentonite powder is then added with stirring and calcined magnesite and/or the precipitated highly active magnesium oxide, is added to this transportable mixture with stirring immediately prior to use.

## Revendications

1. Procédé de fabrication d'une injectiondispersion à partir d'une solution concentrée de chlorure de magnésium, de magnésite calcinée, d'ajouts et d'une certaine proportion de matière plastique, pour la consolidation de charbon et/ou de roches adjacentes non exploitées, procédé caractérisé en ce que la proportion de matière plastique, sous forme d'une dispersion de polymère de vinyle non saponifié, est incorporée au mélange tandis que les ajouts sont apportés sous forme de poudre de bentonite et/ou sous forme d'oxyde de magnésium précipité hautement actif.

2. Procédé de fabrication selon la revendication 1, caractérisé en ce qu'il s'agit dans le cas du polymère de vinyle, d'un propionate de polyvinyle.

3. Procédé de fabrication selon l'une quelconque des revendications 1 et 2, caractérisé en ce qu'il s'agit dans le cas du polymère de vinyle, d'un copolymère de chlorure de vinyle et/ou de vinylbenzol et/ou d'ester d'acide acrylique et/ou d'ester d'acide maléique.

4. Procédé de fabrication selon la revendication 3, caractérisé en ce qu'il s'agit dans le cas du copolymère, d'un copolymère d'acétate de vinyle avec de l'ester d'acide acrylique.

5. Procédé de fabrication selon l'une quelconque des revendications 1 à 4, caractérisé en ce que l'injectiondispersion contient jusqu'à 20% en poids de dispersion de polymère de vinyle, de préférence 2,5 à 10% en poids (rapportée à la totalité de l'injection-dispersion) avec une teneur en matière solide de 40 à 60% en poids.

6. Procédé de fabrication selon l'une quelconque des revendications 1 à 5, caractérisé en ce que, en tant qu'ajout, il est apporté jusqu'à 25% en poids de poudre de bentonite.

7. Procédé de fabrication selon l'une quelconque des revendications 1 à 6, caractérisé en ce que, en tant qu'ajout, il est apporté jusqu'à 20% en poids d'oxyde de magnésium précipité hautement actif.

8. Procédé de fabrication selon l'une quelconque des revendications 1 à 7, caractérisé en ce que, la dispersion de polymère de vinyle est ajoutée à la solution de chlorure de magnésium, et on ajoute au liquide, immédiatement avant l'utilisation, de la magnésite calcinée ainsi que de l'oxyde de magnésium hautement actif et/ou de la poudre de bentonite.

9. Procédé de fabrication selon l'une quelconque des revendications 1 à 8, caractérisé en ce que la dispersion de polymère de vinyle est ajoutée à la solution de chlorure de magnésium, puis, sous agitation, de la poudre de bentonite est ajoutée au mélange, et, à ce mélange apte au transport, on ajoute immédiatement avant l'utilisation et sous agitation, la magnésite calcinée et/ou l'oxyde de magnésium précipité hautement actif.